# EUROPEAN PATENT SPECIFICATION

(11) **EP 2 229 825 B1**
(45) Date of publication and mention of the grant of the patent: **04.05.2016**
(21) Application number: 10163537.3
(22) Date of filing: 07.12.2006
(51) Int. Cl.: A23L 23/10, A23L 5/00

(54) **Concentrate for preparing a bouillon, soup, sauce, gravy or for use as a seasoning, the concentrate comprising particulates and xanthan and locust bean gum**
Konzentrat für Bouillon, Suppe, Sosse oder Gewürze, welcher Xanthan und Locust Bean Gum enthält
Concentré pour préparer du bouillon, soupe, souce ou pour être utilisé comme condiment, comprenant du xanthane et gomme de caroube

(30) Priority: 12.12.2005 EP 05077842; 07.06.2006 EP 06115093
(43) Date of publication of application: 22.09.2010
(62) Divisional of application: 06819035.4
(73) Proprietor: Unilever N.V., 3013 AL Rotterdam (NL); Unilever PLC, Blackfriars London Greater London EC4Y 0DY (GB)
(72) Inventor: Achterkamp, Georg, 74074, Heilbronn (DE); Ackermann, Dieter Kurt Karl, 74080 Heilbronn (DE); Inoue, Chiharu, 3133 AT, Vlaardingen (NL); Kohlus, Reinhard, 74074, Heilbronn (DE); Kuhn, Matthias, 74074, Heilbronn (DE)
(74) Representative: Tjon, Hon Kong Guno

(56) References cited:
- WO-A-01/11994
- WO-A-02/35944
- WO-A-97/48290
- US-A- 5 013 573
- US-A- 5 593 716
- US-A- 6 086 937
- US-A1- 2003 044 503
- US-A1- 2004 151 806
- KOVACS P: "USEFUL INCOMPATIBILITY OF XANTHAN GUM WITH GALACTOMANNANS" FOOD TECHNOLOGY, INSTITUTE OF FOOD TECHNOLOGISTS, CHICAGO, IL, US, vol. 27, no. 3, March 1975 (1975-03), pages 26-28,30, XP001057341 ISSN: 0015-6639

## Description

### Field of the Invention

The present invention relates to concentrates for preparing a bouillon, broth, soup, sauce, gravy or for use as a seasoning. More in particular, the invention relates to such concentrates which allow the inclusion of herbs, vegetables, meat, fish or crustaceans which are not completely dry.

### Background of the invention

Concentrates for preparing a bouillon, broth, soup, sauce, gravy, or for use as seasoning are well known in the western and non-western cooking. For brevity, such formulations are herein all abbreviated to "concentrates for preparing a bouillon or for use as a seasoning".

Conventionally, bouillon and seasoning cubes or tablets comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

Such concentrates are conveniently available in the form of rigid or plastic (i.e. deformable) cubes, tablets, crumbly cubes, or as powders, granules, etcetera. These formulations are known as being dry: a moisture content of less than 8%, usually even lower.

Although such dry formulations have advantages in terms of e.g. preservation, they do require all the ingredients to be dry. If ingredients used in such concentrates are not directly available in a dry form (e.g. herbs and vegetables and pieces thereof, pieces of meat), such ingredients need to be dried first. Needless to say, such is both a hassle as well as that it can have a negative impact on the quality of (pieces of) such herbs, vegetables and meat. Hence, there is a need for concentrates for use as seasoning or for preparing a bouillon, broth, soup, sauce, or gravy, which concentrate would allow the use of ingredients, such as for example herbs and/or vegetables and/or fruits or particles thereof as well as pieces of meat, fish or crustaceans, to be in a not completely dry state, i.e. more than 8% (by weight of the herb/vegetable) moisture. Preferably, the concentrates should be shelf stable when in a closed packaging. Preferably, it would allow the use of such ingredients as herbs, vegetables, fruits, meat, fish, crustaceans and particles thereof in the form of intermediate moisture-stabilised ingredients.

WO 2001/072148 discloses cooking aids which are composed of a meltable or dissolvable wall material, enclosing a fluid or pasty filling. Such liquid or pasty filling would allow the use of non-dry herbs and vegetable (particulates) in its filling. However, the manufacture of such filled cubes can be cumbersome.

JP 61/031,068 discloses soup concentrates for use with instant noodles, which soup concentrate is in the form of a jelly, which concentrate needs to be dilluted 5-6 times with water to yield a soup to be consumed or served with noodles. Said jellies are formed with gelatin in combination with one or more of alginate, agar and apple puree. The jellies take 3-6 minutes to dissolve. The jellies in this reference can include meat (pieces) and vegetable (pieces). Although this jelly form allows for non-dry particulates, the jellies disclosed have some disadvantages.

US2003/0044503 relates to a composite food having a gelling agent, and a flavouring and/or texturing component, with the remainder of the composite made up primarily of water. The composite food product is substantially solid and self-sustaining at ambient temperature.

WO02/35944 discloses a non-newtonian, thixotropic jelly drink comprising fruit juice, sweeteners, acidity regulators, preservatives and gelling agents.

Kovacs P: "Useful incompatibility of xanthan gum galactomannans". food technology, vol. 27, no.3, March 1975. p26-28, 30, discloses an Incompatibility study of xanthan gum and locust been gum.

WO01/11994 discloses a flavoured solid-form roux food product comprising edible fat, edible starchy material, a flavouring agent, a solidifying agent, an aquous liquid, and optionally an edible bicarbonate.

US2004/151808 discloses dry soup and pasta dish mixes.

### Summary of the invention

There is a need for packaged concentrates for use as seasoning or for preparing a bouillon, broth, soup, sauce, or gravy, which concentrate is in the form of a (packaged) jelly, which jelly can dissolve in boiling water fairly quickly (e.g. a mass of 30 g would dissolve in 900 ml boiling water in less than 3.5 minutes, preferably less than 3 minutes). It is also preferred that such jelly has a low tendency to syneresis (water separation) and is preferably an elastic, not too rigid gel (as such will facilitate removal from its packaging; elastic and not too rigid can best be judged by hand-feel). Also it is desired that preferably the gel is not too sticky (as such gel is likely to be handled by fingers and to allow easy removal from the packaging), and a simple method for manufacturing such (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1-50 (i.e. allows for high salt levels in the gel). Also, the product should be fairly stable in transport and storage, which is normally at ambient temperatures, but during which temperatures can rise substantially higher. Preferably, the gel should also have a certain strenghth: preferably the strength should be such that the force (in gram) necessary for a plunger to penetrate 10 mm in a gel is above 50, preferably above 70 g. Also low to no phase separation is desired.

It has now been found that such may be achieved (at least in part) by a packaged concentrate as in claim 1.

The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way). The packaged concentrate according to the invention (when taken out of the packaging) has the appearance or rheology of a gel as expressed by a ratio of elastic modulus G': viscous modulus G" of at least 1, preferably at least 3, more preferably at least 5. It can furthermore be preferred that the viscous modulus G" is at least 10 Pa, preferably at least 50 Pa. The method of measuring such is described below.

With "herbs, vegetables, fruits, meat, fish, crustaceans, or particulates thereof" is meant particles having a size such that they are at least visible to the naked eye, in the product as consumed, e.g. upon dillution with water in the required dillution rate (as that is when the particulates or herbs etcetera matter: to be seen just prior to consumption). Thus, "meat powder" as known in the bouillon industry can be difficult to be seen in the jelly cube (e.g. due to the concentration, possible turbidity following certain ingredients), but such conventional meat powder particulates are well visible to the naked eye in the soup or bouillon when prepared in the proper dillution.

Water (as amount) is herein to be understood as the total amount of moisture present. The concentration of salt is to be calculated as (amount of salt) / (amount of salt + total moisture).

The same is true for other dissolved matter, such as gelling agent (amount of gelling agent / (amount of gelling agent + total moisture amount).

It can be preferred that the concentrate according to the present invention comprises 15-30 % (by weight, based on total water content, more preferably 15-26%) salt (preferably NaCl, but also including other salts, preferably in dissolved form). "Salt" in this context can be sodium chloride but it can also be another alkali metal salt such as potassium chloride, or a mixture thereof, or other low-sodium products that aim for the taste impression of sodium chloride, as long as the taste in the end formulation (e.g. bouillon, or seasoned food product) is acceptable. The upper limit of solubility in water of NaCt is around 26% (at room temperature), and hence above this limit some salt crystals may occur. Hence, the amount of salt is preferably (just) below this salt saturation concentration level.

By the above formulation, concentrates for preparing a bouillon, broth, soup, sauce, gravy or for use as a seasoning can be obtained that are different from the conventionally used dry cubes and tablets, in that the concentrates according to the invention are not dry. It allows the use of herbs, vegetables, meat, fish, crustaceans (or particulates thereof) which are partially wet, i.e. not completely dried. What it shares with conventional bouillon cubes and tablets is that it comes in a unit dose format (i.e. not a bulk product like liquid, powder or granules): a portioned amount, individually packaged.

Notwithstanding the fact that the concentrate according to the present invention allows the use of (piece of) herbs, vegetables, meat, fish, crustaceans which are not dry, it is also possible to include such ingredients in dry form in the concentrate according to the present invention. Such dry ingredients may then be to some extent hydrated by the moisture present in the concentrate.

The concentrates are more or less shape stable: it is not an easily flowable product, but it being a gelled product means it can deform (easily) under pressure. By choosing the amount and ratio of xanthan and LBG the desired rheology can be obtained.

The amount and ratio of xanthan and LBG as required will e.g. depend on the amount of salt in the formulation, and such amounts and ratio can be determined by the person of average skill in the art of gelled food products without undue burden. Locust bean gum and xanthan on their own at high salt levels do not really gel, but in combination they do. Typical amounts will be:
- at a salt level of 15%: LBG + xanthan (together): 0.15-5%, more preferably 0.4-2%,
- at a salt level of 25%: LBG + xanthan (together): 0.2-7%, more preferably 0.6-3%, both as wt% on the amount of water as defined above.

LBG and xanthan are herein preferably used in such amounts that the total amount of LBG+xanthan comprises 30-70% LBG and 30-70% xanthan (wt% on total amount of xanthan+LBG). Preferably, these amounts are 40-60% and 60-40%, respectively, and even more preferred 45-55% and 55-45%, respectively. Most preferred ratio is each component in an amount of about 50% and 50%.

The texture or rheologie desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the given product, a ratio of greater than 1 is suitable. It is preferred, however, that said ratio is gerater than 3, more preferably it is gerater than 5.

The absolute value of the viscous modus G" is preferably greater than 10 Pa, more preferred greater than 50 Pa. This criterion distinguishes between thin solutions with gel character and a more shape retaining jelly products that are the intended products according to this invention.

The above given values need should be measured under the following circumstances:
- a maturation time of at least 12 h under ambient conditions,
- measurement temperature of 25 °C,
- an oscillatory frequency of 1 rad/s and
- a strain of 1%.

This set of parameters refers to a standard oscillatory test conducted with a standard state of the art low deformation rheometer as commercially available from e.g. Bohlin or TA Instruments.

The requirements as stated herein for G': G" should preferably apply to the whole concentrate (apart from the particulates mentioned), and not just for a part of it. For example, for a construction like in WO 01/72148 such may be true for the wall material, but not for the fluid or pasty core. Also, it is preferred that the concentrate does not consist of a solid envelope material covering core. It can also be preferred that the concentrate is translucent and/or transparent, apart from the visual elments like herbs, vegetables, meat, fish, crustaceans (or particulates thereof). Hence, of the matrix material (e.g. comprising water, a gelling agent, and optionally salt, taste enhancers, oil) further comprising the visual elments like herbs, vegetables, meat, fish, crustaceans (or particulates thereof), the matrix material is preferably transparent and/or translucent.

The concentrate according to the invention Is preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g/ litre sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners.

As used herein, "sweetness index" is a term used to describe the level of sweetness of the dosage form relative to sucrose. Sucrose, defined as the standard, has a sweetness index of 1. For example, the sweetness indices of several known sweet compounds are listed below:

Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995".

It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

The herbs, vegetables, meat, fish, crustaceans, or particulates thereof (including mixtures thereof) as applied in the current invention can be intermediate moisture components.

Typically, intermediate moisture ingredients will have a water activity a_{w} of 0.5-0.98, preferably 0.6-0.87, more preferably 0.6-0.75.

### Detailed description of the invention

In the concentrates according to the present invention the amount of herbs, vegetables, fruits, meat, fish, crustaceans, or particulates thereof is preferably 1-40%, more preferably 1-20%, most preferably 2-20% (by weight on the total packed concentrate).

The total moisture content of the total concentrate according to the present invention as it is in the packaging (i.e. including the particulates of herbs, vegetables, meat, fish, crustaceans) is 20-80% (by weight, based on total packed concentrate), preferably 40 to 60 % by weight (based on the total packed concentrate). The water activity a_{w} of the total concentrate as it is in the packaging is preferably preferably 0.5-0.98, more preferably 0.6-0.87, even more preferably 0.7-0.8, and most preferably 0.7-0.75. The pH of the total concentrate according to the invention is preferably between 3 and 8, more preferably 4-7. Such pH can be measured after e.g. finely grinding the whole concentrate. In connection to this, it may be preferred that (organic) acids are present. Such may also be the case for taste reasons.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity a_{w} and pH of the composition may ensure such.

Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature. This can be achieved at high salt levels, e.g. at 20-26% salt (on water basis). Hence, such salt level can be preferred.

Next to the ingredients mentioned, it may be preferred for the concentrates according to the present invention that they further comprise 0.5 - 30 % (weight on total concentrate) of a taste enhancer selected from the group of monosodium glutamate, 5'-ribotides, organic acids, or mixtures thereof. Salt can also be seen as a taste enhancer, but is herein regarded as a separate category of ingredients.

Fats and/or oils may be used as an ingredient in the concentrates according to the present invention. They may contribute to flavour and/or mouthfeel. Due to the aqueous nature of the concentrates, such fat is preferably present in an emulsified or dispersed form. Use of emulsifers and/or stabilisers may be desired. Hence, it may be preferred that the concentrate according to the present invention further comprises 1-30% (weight on total packaged concentrate) of emulsified or dispersed oil and/or fat, preferably 1-15%.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1-10 kg, preferably 2-250 g, more preferably 10-50 g. The portion of the concentrate according to the present invention as packaged is preferably such that the concentrate has a weight excluding packaging) of 1-10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

The packaged concentrates according to the present invention are preferably translucent or transparent. This can also make it attractive to choose e.g. packaging which is at least partially transparent.

The invention further relates to a process for the preparation of the concentrates according to the present invention. A process for the preparation may comprise the steps of mixing the ingredients with the water, filling into the packaging (e.g. blister packs or cups or tubs) and closing the packs (e.g. by a seal), whereby preferably a heating step is applied prior to, during or after filling into the packaging, for preservation purposes and/or to facilitate dissolution of ingredients and/or achieving gelation (upon cooling thereafter) of thermoset gels. Alternatively, the (heated) mixture may be poured in moulds, cooled to set. After setting to a gel, the gelled concentrate will have to be removed from the moulds and packaged. It is preferred, however, to manufacture directly into the packaging. It is preferred that the steps of mixing the ingredients with the water, filling into the packaging and closing the packaging, whereby a heating step is applied prior to, and/or during and/or after filling into the packaging.

In the above process, it is preferred that at least part of the heating stage is to a temperature of at least 80°C. Also, it is preferred that the temperature of the mixture during the filling is at least 70°C. When fat is used solid at room temperature, it is preferably melted first before adding to other components.

The invention further relates to the use of a concentrate as set out above, for preparing a bouillon, broth, soup, sauce, gravy or for use as a seasoning. This may be done by diluting with an aqueous liquid (e.g. water) under application of heat, in e.g. a ratio of 1:15 - 1: 100, preferably 1:20 - 1:70, more preferably 1:20 - 1:50.

The invention further relates to the use of the concentrate according to the present invention and as set out above for preparing a bouillon, broth, soup, sauce, gravy or for use as a seasoning. Such use e.g. implies removing the concentrate from its packaging, and adding it to food or a dish, either during or after its preparation, optionally further applying heat and/or stirring the food or dish with such concentrate.

### Examples

### Example 1: medium salt jelly with xanthan + LBG and fresh vegetables

| | **Recipe Dry Base Mix** |
|---|---|
| **Ingredient** | **kg** |
| vegetable flavour | 7.500 |
| yeast extract | 1.200 |
| IG | 0.400 |
| Sugar | 8.000 |
| MSG | 8.000 |
| Salt | 10.000 |
| Spices | 2.400 |
| vegetable powders | 3.200 |
| Acidifier | 1.000 |
| | |
| | 41.70 |

| | **Recipe Jelly** |
|---|---|
| **Ingredient** | **kg** |
| Dry Base Mix | 41.700 |
| Water | 50.000 |
| Xanthan | 0.500 |
| LGB | 0.500 |
| frozen vegebles | |
| Carrot grits | 6.000 |
| Parsley leaves frozen | 3.000 |
| Leek pieces | 5.000 |
| Onion pieces frozen | 7.000 |
| | 113.700 |

### Process Dry Mix

Add all dry ingrdients into a Lödige Mixer
Mix dry powders at 120rpm without chopper for 5min until homogeneous
Pack into plastic bags
Close and store at ambient temperature

### Process Jelly

Add water into a vessel (Unimix)
Add xanthan and LBG
Continue mixing for 30min
Add dry mix and mix still homogenuous
Heat up to 95°C
Add frozen vegetables
Heat up to 95°C
Keep at 95°C for 5min
Hot filling into glas jars of 50ml
Capping of glass jars
Cooling down at room temperature for 24h.

### Example 2: high salt jelly with xanthan + LBG

| | **Recipe Dry Base Mix** |
|---|---|
| **Ingredient** | **Kg** |
| Chicken flavour | 8.400 |
| Chicken meat powder | 3.000 |
| Yeast extract | 1.200 |
| IG | 0.400 |
| Carrot grits | 0.900 |
| Sugar | 10.200 |
| Onion pieces | 3.000 |
| Leek pieces | 1.000 |
| Maltodextrin | 8.500 |
| MSG | 17.000 |
| Parsley leaves | 1.300 |
| Salt | 35.000 |
| Spices | 2.400 |
| Vegetables powders | 1.700 |
| Potato starch | 6.000 |
| | 100.00 |

| | **Recipe Jelly** |
|---|---|
| **Ingredient** | **Kg** |
| Dry Base Mix | 50.000 |
| Water | 50.000 |
| Xanthan | 0.400 |
| LGB | 0.400 |
| | 100.800 |

### Process Dry Mix

Add all dry ingrdients into a Lödige Mixer
Mix dry powders at 120rpm without chopper for 5min until homogeneous
Pack into plastic bags
Close and store at ambient temperature

### Process Jelly

Add water into a vessel (Unimix)
Add xanthan and LBG
Continue mixing for 30min
Add dry mix and mix still homogeneous
Heat up to 90°C
Keep at 90°C for 10min
Hot filling into glas jars of 40ml
Capping of glass jars
Cooling down at room temperature for 24h.

The resulting products of both examples 1 and 2 had the appearance of a gel and were shape stable.

### Example 3:

### Dry mix (g):

375 g salt
200 g palm fat
175 g MSG
27.45 g flavouring components, spices and taste enhancers

### Vegetable mix (g):

220 g frozen grated carrots
110 g frozen grated leek
70 g frozen grated spinach
50 g frozen grated bell pepper
30 g frozen grated pumpkin
20 g frozen grated celery
15 g frozen grated com

### Gelling system:

700 g water
8 g xanthan
3.5 g LBG

A product was made by mixing all ingredients, heating to 80°C, pouring in moulds and cooling to set. The resulting product looked like a gel, was shape stable, and 15 g of the gel dissolved in less than 2 minutes when immersed in boiling water (dillution 30 times).

**Examples 4-7:** several bouillon concentrates have been prepared with varying taste according to the recipes as described below. Moisture was added as water, all other ingredients are used in a dry form (that is: commercially dry, which usually means for such ingredients 1-3% of moisture). The a_{w} and G' and G" have been measured: these results are given after example 4. All four products appeared as gels.

### Example 4: Beef Jelly with LBG+xanthan

| **Description** | **Amount [%]** | **Amount [g] for 10kg** |
|---|---|---|
| Sugar | 2 | 0.2 |
| Salt | 18.4 | 1.84 |
| Flavour | 4.9 | 0.49 |
| Citric Acid powder | 0.5 | 0.05 |
| Vegetable powder | 0.45 | 0.045 |
| Yeast extract | 1.5 | 0.15 |
| Spices | 0.2 | 0.02 |
| 5'-ribotides | 0.2 | 0.02 |
| MSG | 5.1 | 0.51 |
| Palm fat | 10.5 | 1.05 |
| Water | 55.38 | 5.535 |
| Xanthan | 0.3 | 0.03 |
| Locus Bean Gum | 0.3 | 0.03 |
| Total | 100 | 10 |

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water into the vessel and close the vessel.
6. Heat up to 90°C while stirring
7. Keep at 90°C for 3min while stirring
8. Hot filling into oval tubs of 35ml size, followed by sealing and leaving to cool to room temperature.

### Example 5: Fish Jelly with LBG+xanthan

| Description | Amount [%] | Amount [g] for 10kg |
|---|---|---|
| Fish powder | 8 | 0.8 |
| Flavour | 0.5 | 0.05 |
| Palm fat | 5.8 | 0.58 |
| Creamer powder | 16.1 | 1.61 |
| Spices | 0.1 | 0.01 |
| Lactid acid (liquid) | 0.6 | 0.06 |
| Water | 40 | 4 |
| Modified starch | 3.5 | 0.35 |
| Salt | 13.1 | 1.31 |
| MSG | 4.4 | 0.44 |
| Locus Bean Gum | 0.5 | 0.05 |
| Xanthan | 0.5 | 0.05 |
| Sugar | 6.6 | 0.66 |
| 5'-ribotides | 0.2 | 0.02 |
| Caramel powder | 0.1 | 0.01 |
| Total | 100 | 10 |

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water and lactic acid into the vessel and close the vessel.
6. Heat up to 90°C while stirring
7. Keep at 90°C for 3min while stirring
8. Hot filling into oval tubs of 35ml size, followed by sealing and leaving to cool to room temperature.

### Example 6: Chicken Jelly (LBG+xanthan)

| Description | Amount [%] | Amount [g] for 10kg |
|---|---|---|
| Chicken extract | 3.2 | 0.32 |
| Chicken meat powder | 7.3 | 0.73 |
| Chicken fat | 16.1 | 1.61 |
| Spices | 0.4 | 0.04 |
| Water | 44.4 | 4.44 |
| Flavour | 1.3 | 0.13 |
| Salt | 17.3 | 1.73 |
| MSG | 4 | 0.4 |
| Locus Bean Gum | 0.5 | 0.05 |
| Xanthan | 0.5 | 0.05 |
| Sugar | 4.8 | 0.48 |
| 5'-ribotides | 0.2 | 0.02 |
| Total | 100 | 10 |

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water and lactic acid into the vessel and close the vessel.
6. Heat up to 90°C while stirring
7. Keep at 90°C for 3min while stirring
8. Hot filling into round tubs of 15ml size, followed by sealing and leaving to cool to room temperature.

### Example 7: Pork Jelly with LBG+xanthan

| Description | Amount [%] | Amount [g] for 10kg |
|---|---|---|
| Pork Flavour | 1.5 | 0.15 |
| Water | 41.5 | 4.15 |
| Pork fat | 12.1 | 1.21 |
| Pork meat powder | 6.1 | 0.61 |
| Salt | 13.6 | 1.36 |
| MSG | 5.3 | 0.53 |
| Locus Bean Gum | 0.5 | 0.05 |
| Xanthan | 0.5 | 0.05 |
| Sugar | 3.8 | 0.38 |
| Palm fat | 3 | 0.3 |
| Pork bone powder | 12.1 | 1.21 |
| Total | 100 | 10 |

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water into the vessel and close the vessel.
6. Heat up to 90°C while stirring
7. Keep at 90°C for 3min while stirring
8. Hot filling into round tubs of 15ml size, followed by sealing and leaving to cool to room temperature

Results examples 4-7: ratio G' / G" at 21°C (ambient, as measured following the instructions in the description):

| Recipe | Storage modulus G' (Pa) | Loss modulus G" (Pa) | Ratio G'/G" | a_{w} | Dillution rate | Dillution time (s) | syneresis |
|---|---|---|---|---|---|---|---|
| | | | | | | | |
| Beef | 75.48 | 14.41 | 5.24 | 0.68 | 28 | 90 | Low |
| Fish | 1061.50 | 186.70 | 5.69 | 0.74 | 26 | 180 | Very low |
| Chicken | 187.50 | 39.55 | 4.74 | 0.73 | 29 | 120 | Low |
| Pork | 466.29 | 100.38 | 4.65 | 0.73 | 30 | 90 | Very low |

The gel strength was measured using the following method:
- using a texture analyser from Microstable Sytems, model TA XT2 with 5 kg load cell.
- Plunger: Diameter (according AOAC method) 0.5 inches means 12.7 mm, height 35 mm, plane surface, sharp edges, material plastics.
- Sample Containers have an influence on results if not very large. Therefore the choosen container should always be the same. We have used plastic containers for model systems (diameter bottom 5.5 cm; diameter top 6.5 cm; height 8.5 cm) and glass jars for process trials with recipes other than model systems (diameter 7 cm; height 4 cm).
- After preparation, samples have been stored at ambient conditions (21°C) at least over night before measurement.
- TA-Parameters: Pre speed 1 mm/s, Test speed 0.5 mm/s, Re speed 10 mm/s, Distance 15 mm, Trigger Auto, Force 0.5 g, Stop recording at target. Result we take from the recorded graph is force at 10 mm penetration depth (should be in N, but simplified in g).

## Claims

1. Packaged concentrate for preparing a bouillon, broth, soup, sauce, gravy or for use as a seasoning, by diluting said concentrate with an aqueous liquid under application of heat said concentrate comprising:
- 20-80% water, preferably 40-60% (weight % based on total packaged concentrate),
- 0.5-60% by weight of herbs, vegetables, fruits, meat, fish, crustaceans, or particulates thereof, (weight % based on total packaged concentrate),
- 0.1 % to 10% (weight % based on water content of concentrate) of a gelling agent comprising the combination of xanthan and locust bean gum (LBG), whereby the concentration of gelling agent is to be calculated as (amount of gelling agent / (amount of gelling agent + total moisture amount),
- 15-30% (weight % based on water content of concentrate), more preferably 15-26%) of salt, whereby the concentration of salt is to be calculated as (amount of salt) / (amount of salt + total moisture),
wherein the concentrate has the appearance and the rheology of a gel;
wherein the appearance or rheology of a gel is expressed by the ratio of elastic modulus G' : viscous modulus G" of at least 1, preferably at least 3.

2. Concentrate according to claim 1, wherein the salt comprises NaCl, KCl or a mixture thereof, preferably the salt is NaCl.

3. Concentrate according to any one of the preceding claims, wherein said concentrate comprises 15-30% more preferably 15-26%) NaCl (weight % based on water content of concentrate), whereby the concentration of salt is to be calculated as (amount of salt) / (amount of salt + total moisture).

4. Concentrate according to any one of the preceding claims, whereby the dilution is in a ratio of 1:15 - 1:50.

5. Concentrate according to any one of the preceding claims, wherein viscous modulus G" is at least 10 Pa, preferably at least 50 Pa.

6. Concentrate according to any one of the preceding claims, wherein the amount of a gelling agent comprising the combination of xanthan and locust bean gum (LBG) is 0.2-7%, preferably 0.6-3% (weight % based on water content of concentrate) whereby the concentration of gelling agent is to be calculated as (amount of gelling agent / (amount of gelling agent + total moisture amount).

7. Concentrate according to any one of the preceding claims, wherein the combination of xanthan and LBG is 0.2-7%, preferably 0.6-3% (weight % based on water content of concentrate) whereby the concentration of gelling agent is to be calculated as (amount of gelling agent / (amount of gelling agent + total moisture amount).

8. Concentrate according to any one of the preceding claims, wherein gelling agent consists of the combination of xanthan and LBG.

9. Concentrate according to any one of the preceding claims, wherein the concentrate has a water activity a_{w} of 0.5 to 0.87, preferably 0.6 to 0.87, preferably 0.7-0.8.

10. Concentrate according to any one of the preceding claims, further comprising 0.5 to 30% (weight on total concentrate) of a taste enhancer selected from the group of monosodium glutamate, 5'-ribotides, organic acids, or mixtures thereof.

11. Concentrate according to any one of the preceding claims, further comprising 1-30%, preferably 1-15% (weight on total packaged concentrate) of emulsified oil and/or fat.

12. Concentrate according to any one of the preceding claims, wherein the portion of the concentrate as packaged is such that the concentrate has a weight (excluding packaging) of 2g -10 kg, preferably 10g - 10 kg, more preferably 10 g to 250 g.

13. Concentrate according to any one of the preceding claims, wherein the concentrate is packaged in a cup or tub with a seal.

14. Concentrate according to any one of the preceding claims, whereby 30 g of the concentrate dissolves in 900 ml boiling water in less than 3.5 minutes, preferably less than 3 minutes.

15. Concentrate according to any one of the preceding claims, wherein the concentrate is a concentrate for preparing a bouillon.

16. Concentrate according to any one of the preceding claims, wherein the concentrate is a concentrate for preparing a bouillon and wherein the portion of the concentrate as packaged is such that the concentrate has a weight (excluding packaging) of 10g - 10 kg, more preferably 10 g to 250 g.

17. Method for preparing a bouillon, soup, sauce or gravy comprising the step of diluting a concentrate according to any one of the preceding claims 1- 16 by diluting said concentrate with an aqueous liquid under application of heat, preferably in a ratio of 1:15 - 1: 50.

18. Use of a concentrate according to any one of the preceding claims 1-16 for preparing a bouillon, soup, sauce or gravy.

19. Use of a concentrate according to any one of the preceding claims 1-16 for preparing a bouillon.

20. Use of a concentrate according to any one of claims 1-16, as a seasoning, whereby said use includes removing the concentrate from its packaging, and adding it to food or a dish, either during or after its preparation, further applying heat and stirring the food or dish with such concentrate.

21. Process for preparing a concentrate according to any one of the preceding claims 1 to 16, said process comprising the steps of mixing the ingredients with the water, filling into the packaging and closing the packs, whereby preferably a heating step is applied prior to, during or after filling into the packaging.

22. Process according to claim 21, wherein at least part of the heating stage is to a temperature of at least 70°C.

23. Process according to any one of claims 21 or 22, wherein the concentrate is manufactured directly into the packaging.

24. Process according to any one of claims 21 to 23 comprising the step of hot filling into the packaging.

## Patentansprüche

1. Verpacktes Konzentrat zur Zubereitung einer Bouillon, Brühe, Suppe, Soße, Bratensoße oder zur Verwendung als Würze, indem das Konzentrat mit einer wässrigen Flüssigkeit unter Anwendung von Wärme verdünnt wird, wobei das Konzentrat umfasst:
- 20-80% Wasser, vorzugsweise 40-60% (Gewichts-% bezogen auf das gesamte verpackte Konzentrat),
- 0,5-60 Gewichts-% Kräuter, Gemüse, Früchte, Fleisch, Fisch, Krustentiere oder Teilchen davon (Gewichts-% bezogen auf das gesamte verpackte Konzentrat),
- 0,1% bis 10% (Gewichts-% bezogen auf den Wassergehalt des Konzentrats) eines Geliermittels, umfassend die Kombination von Xanthan und Johannisbrot-Gummi (LBG), wobei die Konzentration des Geliermittels als (Menge des Geliermittels/ (Menge des Geliermittels + gesamte Feuchtigkeitsmenge) zu berechnen ist,
- 15-30% (Gewichts-% bezogen auf den Wassergehalt des Konzentrats), bevorzugter 15-26% Salz, wobei die Konzentration des Salzes als (Menge des Salzes) / (Menge des Salzes + gesamte Feuchtigkeit) zu berechnen ist,
wobei das Konzentrat das Aussehen und die Rheologie eines Gels hat,
wobei das Aussehen oder die Rheologie eines Gels durch das Verhältnis von Elastizitätsmodul G' : Viskositätsmodul G" von mindestens 1, vorzugsweise mindestens 3, ausgedrückt wird.

2. Konzentrat nach Anspruch 1, wobei das Salz NaCl, KCl oder eine Mischung davon umfasst, vorzugsweise das Salz NaCl ist.

3. Konzentrat nach irgendeinem der vorhergehenden Ansprüche, wobei das Konzentrat 15-30%, bevorzugter 15-26% NaCl (Gewichts-% bezogen auf den Wassergehalt des Konzentrats) umfasst, wobei die Konzentration des Salzes als (Menge des Salzes) / (Menge des Salzes + gesamte Feuchtigkeit) zu berechnen ist.

4. Konzentrat nach irgendeinem der vorhergehenden Ansprüche, wobei die Verdünnung in einem Verhältnis von 1:15 - 1:50 erfolgt.

5. Konzentrat nach irgendeinem der vorhergehenden Ansprüche, wobei der Viskositätsmodul G" mindestens 10 Pa, vorzugsweise mindestens 50 Pa beträgt.

6. Konzentrat nach irgendeinem der vorhergehenden Ansprüche, wobei die Menge eines Geliermittels, umfassend die Kombination von Xanthan und Johannisbrot-Gummi (LBG) 0,2-7%, vorzugsweise 0,6-3% (Gewichts-% bezogen auf den Wassergehalt des Konzentrats) beträgt, wobei die Konzentration des Geliermittels als (Menge des Geliermittels / (Menge des Geliermittels + gesamte Feuchtigkeitsmenge) zu berechnen ist.

7. Konzentrat nach irgendeinem der vorhergehenden Ansprüche, wobei die Kombination von Xanthan zu LBG 0,2-7%, vorzugsweise 0,6-3% (Gewichts-% bezogen auf den Wassergehalt des Konzentrats) beträgt, wobei die Konzentration des Geliermittels als (Menge des Geliermittels / (Menge des Geliermittels + gesamte Feuchtigkeitsmenge) zu berechnen ist.

8. Konzentrat nach irgendeinem der vorhergehenden Ansprüche, wobei das Geliermittel aus der Kombination von Xanthan und LBG besteht.

9. Konzentrat nach irgendeinem der vorhergehenden Ansprüche, wobei das Konzentrat eine Wasseraktivität a_{w} von 0,5 bis 0,87, vorzugsweise 0,6 bis 0,87, vorzugsweise 0,7 bis 0,8, aufweist.

10. Konzentrat nach irgendeinem der vorhergehenden Ansprüche, des Weiteren umfassend 0,5 bis 30% (Gewicht auf gesamtes Konzentrat) an Geschmacksverstärker, ausgewählt aus der Gruppe von Mononatriumglutamat, 5'-Ribotiden, organischen Säuren oder Mischungen davon.

11. Konzentrat nach irgendeinem der vorhergehenden Ansprüche, des Weiteren umfassend 1-30%, vorzugsweise 1-15% (Gewicht auf gesamtes verpacktes Konzentrat) emulgiertes Öl und/oder Fett.

12. Konzentrat nach irgendeinem der vorhergehenden Ansprüche, wobei der Anteil des Konzentrats, wie verpackt, derartig ist, dass das Konzentrat ein Gewicht (ausschließlich Verpackung) von 2 g - 10 kg, vorzugsweise 10 g - 10 kg, bevorzugter 10 g - 250 g, aufweist.

13. Konzentrat nach irgendeinem der vorhergehenden Ansprüche, wobei das Konzentrat in einem Becher oder in einer Wanne mit einem Verschluss verpackt ist.

14. Konzentrat nach irgendeinem der vorhergehenden Ansprüche, wobei sich 30 g des Konzentrats in weniger als 3,5 Minuten, vorzugsweise in weniger als 3 Minuten, in 900 ml kochendem Wasser lösen.

15. Konzentrat nach irgendeinem der vorhergehenden Ansprüche, wobei das Konzentrat ein Konzentrat zur Zubereitung einer Bouillon ist.

16. Konzentrat nach irgendeinem der vorhergehenden Ansprüche, wobei das Konzentrat ein Konzentrat zur Zubereitung einer Bouillon ist und wobei der Anteil des Konzentrats, wie verpackt, derartig ist, dass das Konzentrat ein Gewicht (ausschließlich Verpackung) von 10 g - 10 kg, bevorzugter 10 g bis 250 g, aufweist.

17. Verfahren zur Herstellung einer Bouillon, einer Suppe, einer Soße oder einer Bratensoße, umfassend die Schritte des Verdünnens eines Konzentrats nach irgendeinem der vorhergehenden Ansprüche 1 - 16, indem das Konzentrat mit einer wässrigen Flüssigkeit unter Anwendung von Wärme, insbesondere in einem Verhältnis von 1:15 - 1:50, verdünnt wird.

18. Verwendung eines Konzentrats nach irgendeinem der vorhergehenden Ansprüche 1-16 zur Zubereitung einer Bouillon, einer Suppe, einer Soße oder einer Bratensoße.

19. Verwendung eines Konzentrats nach irgendeinem der vorhergehenden Ansprüche 1-16 zur Zubereitung einer Bouillon.

20. Verwendung eines Konzentrats nach irgendeinem der Ansprüche 1-16 als Würze, wobei diese Verwendung das Entfernen des Konzentrats aus seiner Verpackung und seine Zugabe zum Nahrungsmittel oder zu einem Gericht einbezieht, entweder während oder nach der Zubereitung unter weiterer Anwendung von Wärme und Rühren des Nahrungsmittels oder des Gerichts mit einem derartigen Konzentrat.

21. Verfahren zur Herstellung eines Konzentrats nach irgendeinem der vorhergehenden Ansprüche 1 bis 16, wobei das Verfahren die Schritte des Mischens der Zutaten mit Wasser, Einfüllen in die Verpackung und Verschließen der Verpackung umfasst, wobei vorzugsweise ein Erwärmungsschritt vor, während oder nach dem Füllen in die Verpackung durchgeführt wird.

22. Verfahren nach Anspruch 21, wobei zumindest ein Teil des Erwärmungsschritts bei einer Temperatur von mindestens 70°C stattfindet.

23. Verfahren nach irgendeinem der Ansprüche 21 oder 22, wobei das Konzentrat direkt in die Verpackung hinein hergestellt wird.

24. Verfahren nach irgendeinem der Ansprüche 21 bis 23, umfassend den Schritt des Heißfüllens in die Verpackung.

## Revendications

1. Concentré emballé pour la préparation d'un bouillon, d'un brouet, d'une soupe, d'une sauce, d'un jus ou pour une utilisation comme un assaisonnement, par dilution dudit concentré avec un liquide aqueux sous application de chaleur audit concentré comprenant :
- 20-80 % d'eau, de préférence 40-60 % (% en masse rapporté au concentré emballé total),
- 0,5-60 % en masse d'herbes, de légumes, de fruits, de viande, de poisson, de crustacés, ou de matières particulaires de ceux-ci, (% en masse rapporté au concentré emballé total),
- 0,1 % à 10 % (% en masse rapporté au contenu d'eau du concentré) d'un agent gélifiant comprenant la combinaison de xanthane et de gomme de caroube (LBG), la concentration d'agent gélifiant doit par-là être calculée comme (quantité d'agent gélifiant)/(quantité d'agent gélifiant + quantité d'humidité totale),
- 15-30 % (% en masse rapporté au contenu d'eau du concentré), encore mieux 15-26 % de sel, la concentration de sel doit par-là être calculée comme (quantité de sel)/ (quantité de sel + humidité totale),
dans lequel le concentré présente l'apparence et la rhéologie d'un gel ;
dans lequel l'apparence ou la rhéologie d'un gel est exprimée par le rapport de module élastique G' : module visqueux G" d'au moins 1, de préférence d'au moins 3.

2. Concentré selon la revendication 1, dans lequel le sel comprend NaCl, KCl ou un mélange de ceux-ci, le sel est de préférence NaCl.

3. Concentré selon l'une quelconque des revendications précédentes, dans lequel ledit concentré comprend 15-30 %, encore mieux 15-26 % de NaCl (% en masse rapporté au contenu d'eau du concentré), la concentration de sel doit par-là être calculée comme (quantité de sel)/ (quantité de sel + humidité totale).

4. Concentré selon l'une quelconque des revendications précédentes, la dilution est par-là dans un rapport de 1:15-1:50.

5. Concentré selon l'une quelconque des revendications précédentes, dans lequel le module visqueux G" est d'au moins 10 Pa, de préférence d'au moins 50 Pa.

6. Concentré selon l'une quelconque des revendications précédentes, dans lequel la quantité d'un agent gélifiant comprenant la combinaison de xanthane et de gomme de caroube (LBG) est de 0,2-7 %, de préférence de 0,6-3 % (% en masse rapporté au contenu d'eau du concentré), la concentration d'agent gélifiant doit par-là être calculée comme (quantité d'agent gélifiant)/(quantité d'agent gélifiant + quantité d'humidité totale).

7. Concentré selon l'une quelconque des revendications précédentes, dans lequel la combinaison de xanthane et de LBG est de 0,2-7 %, de préférence de 0,6-3 % (% en masse rapporté au contenu d'eau du concentré), la concentration d'agent gélifiant doit par-là être calculée comme (quantité d'agent gélifiant)/(quantité d'agent gélifiant + quantité d'humidité totale).

8. Concentré selon l'une quelconque des revendications précédentes, dans lequel l'agent gélifiant est constitué de la combinaison de xanthane et de LBG.

9. Concentré selon l'une quelconque des revendications précédentes, dans lequel le concentré présente une activité d'eau a_{w} de 0,5 à 0,87, de préférence de 0,6 à 0,87, de préférence de 0,7-0,8.

10. Concentré selon l'une quelconque des revendications précédentes, comprenant de plus de 0,5 à 30 % (masse sur le concentré total) d'un exhausteur de goût choisi dans le groupe constitué par le glutamate de monosodium, les 5'-ribotides, des acides organiques, ou des mélanges de ceux-ci.

11. Concentré selon l'une quelconque des revendications précédentes, comprenant de plus 1-30 %, de préférence 1-15 % (masse sur concentré emballé total) d'huile et/ou de graisse émulsionnée.

12. Concentré selon l'une quelconque des revendications précédentes, dans lequel la portion du concentré dans une forme emballée est telle que le concentré présente une masse (excluant l'emballage) de 2 g-10 kg, de préférence 10 g-10 kg, encore mieux 10 g à 250 g.

13. Concentré selon l'une quelconque des revendications précédentes, dans lequel le concentré est emballé dans un bol ou un tube avec un scellement.

14. Concentré selon l'une quelconque des revendications précédentes, sur quoi 30 g du concentré se dissolvent dans 900 ml d'eau en ébullition en moins de 3,5 minutes, de préférence moins de 3 minutes.

15. Concentré selon l'une quelconque des revendications précédentes, dans lequel le concentré est un concentré pour la préparation d'un bouillon.

16. Concentré selon l'une quelconque des revendications précédentes, dans lequel le concentré est un concentré pour la préparation d'un bouillon et dans lequel la portion du concentré dans une forme emballée est telle que le concentré présente une masse (excluant l'emballage) de 10 g-10 kg, encore mieux 10 g à 250 g.

17. Procédé pour la préparation d'un bouillon, d'une soupe, d'une sauce ou d'un jus comprenant l'étape de dilution d'un concentré selon l'une quelconque des revendications 1-16 précédentes par dilution dudit concentré avec un liquide aqueux sous l'application de chaleur, de préférence dans un rapport de 1:15-1:50.

18. Utilisation d'un concentré selon l'une quelconque des revendications 1-16 précédentes pour la préparation d'un bouillon, d'une soupe, d'une sauce ou d'un jus.

19. Utilisation d'un concentré selon l'une quelconque des revendications 1-16 précédentes pour la préparation d'un bouillon.

20. Utilisation d'un concentré selon l'une quelconque des revendications 1-16, comme un assaisonnement, ladite utilisation comprend par-là le prélèvement du concentré de son emballage, et l'addition de celui-ci à un aliment ou à un plat, soit pendant, soit après sa préparation, puis l'application de chaleur et l'agitation de l'aliment ou du plat avec un tel concentré.

21. Procédé de préparation d'un concentré selon l'une quelconque des revendications 1 à 16 précédentes, ledit procédé comprenant les étapes de mélange des ingrédients avec l'eau, l'introduction dans l'emballage et la fermeture des emballages, sur quoi une étape de chauffage est de préférence appliquée avant, pendant ou après l'introduction dans l'emballage.

22. Procédé selon la revendication 21, dans lequel au moins une partie de l'étape de chauffage se fait à une température d'au moins 70 °C.

23. Procédé selon l'une quelconque des revendications 21 ou 22, dans lequel le concentré est fabriqué directement dans l'emballage.

24. Procédé selon l'une quelconque des revendications 21 à 23 comprenant l'étape d'introduction à chaud dans l'emballage.
